# EUROPEAN PATENT SPECIFICATION

(11) **EP 4 282 754 B1**
(45) Date of publication and mention of the grant of the patent: **17.12.2025**
(21) Application number: 22400003.4
(22) Date of filing: 24.05.2022
(51) Int. Cl.: B64C 27/04, B64C 1/26

(54) **AN ATTACHMENT ASSEMBLY FOR ATTACHMENT OF A TAIL BOOM TO A REAR FUSELAGE OF A ROTORCRAFT**
BEFESTIGUNGSANORDNUNG ZUR BEFESTIGUNG EINES HECKAUSLEGERS AN EINEM HINTEREN RUMPF EINES DREHFLÜGLERS
ENSEMBLE DE FIXATION DESTINÉ À LA FIXATION D'UNE POUTRE DE FUSEAU D'EMPENNAGE À UN FUSELAGE ARRIÈRE D'UN AÉRONEF À VOILURE TOURNANTE

(43) Date of publication of application: 29.11.2023
(73) Proprietor: AIRBUS HELICOPTERS DEUTSCHLAND GmbH, 86609 Donauwörth (DE)
(72) Inventor: BLACHA, Martin, D-86609 DONAUWÖRTH (DE)
(74) Representative: Pouillot, Laurent Pierre Paul

(56) References cited:
- EP-A1- 3 225 537
- CN-U- 212 448 075
- GB-A- 2 359 533
- US-A- 5 108 259
- US-B2- 11 292 596

## Description

The invention is related to an attachment assembly for attachment of a tail boom to a rear fuselage of a rotorcraft. The invention is further related to a tail boom for a rotorcraft, which comprises such an attachment assembly, as well as to a rotorcraft with a rear fuselage and a tail boom, wherein the tail boom is attached to the rear fuselage by means of such an attachment assembly.

Conventional rotorcraft design usually involves provision of a single main rotor and an auxiliary tail rotor that is adapted to counter torque and provide directional yaw control, wherein the tail rotor is mounted at a rear end of an associated supporting structure that is annexed to a given main fuselage body of the rotorcraft. Generally, the associated supporting structure is defined by a so-called tail boom of the rotorcraft and is typically implemented as a single beam element with an aft portion, where the tail rotor is located. Furthermore, a fin can be arranged at the same location as the tail rotor for providing directional stability during forward flight, thereby relieving the tail rotor and reducing power supply required for anti-torque operation. Moreover, horizontal tail planes can be arranged as well at the aft portion of the tail boom or on top of the fin in order to provide for pitch stability.

Usually, the tail boom comprises a load carrying tail boom structure that accommodates driving controls associated with the tail rotor, antennae and/or other systems. Corresponding driving shafts for driving the tail rotor are typically arranged outside and on top of this load carrying tail boom structure to allow for easy inspection and maintenance.

The load carrying tail boom structure must generally be designed according to static, dynamic and fatigue requirements, wherein especially the fatigue requirements are comparatively demanding requirements. In particular, the load carrying tail boom structure must be provided with a suitable bending and torsional stiffness, a suitable strength and an appropriate mass. In addition, operational requirements, such as corrosion resistance, ability for dismounting, ability for replacement and even interchangeability must be considered for a suitable service operation. The term "ability for replacement" generally refers to exchanging a tail boom with another one, while the term "interchangeability" generally refers to using the tail boom of one rotorcraft for another one.

On the basis of these design and operational requirements, two types of load carrying tail boom structures are mainly implemented, which differ from each other with respect to their structural integration within the main fuselage body. More specifically, a first type of tail boom is defined as a slim beam element that is attached on its front end to an aft and top region of the main fuselage body. This arrangement, however, leads to a reduction of a respective cabin height in the aft region of the main fuselage body and, in the case of rear loading rotorcraft configurations, to a reduction of a corresponding loading clearance. Such tail booms according to the first type usually comprise an essentially circular cross section with a flat top or bottom base. A second type of tail boom is defined as one single boom that is attached to the main fuselage body by means of a smoothly tapered transition from the main fuselage body to the tail (so-called "fish tails"). Its cross section is, however, larger than that of the tail boom according to the first type, thus, leading to larger downloads generated by downwash of the main rotor in operation.

Usually, both types of tail booms are embodied as composite tail booms and provided with attachment interfaces at their transitions to the main fuselage body. Typically, there is a structural kink in the loft of the main fuselage body, which corresponds to the attachment interface of the tail boom that is mounted to a corresponding attachment section at a rear fuselage of the main fuselage body. In other words, a physical separation between the main fuselage body and the tail boom is typically implemented, which allows for a separate manufacturing of the tail boom structure with respect to the main fuselage body. Such a separate manufacturing and the attachment interface are advantageous in that they allow for a replacement of the tail boom, if required, and in that a suitable transportability can be guaranteed, in particular for larger sizes of rotorcrafts.

However, in design and sizing of respective attachment interfaces, it must be considered that the attachment interfaces must be able to transfer, in operation of an associated rotorcraft, longitudinal, i. e. axial loads arising from underlying bending loads and drag, as well as tangential, i. e. circumferential loads arising from transverse shear and torsion loads. Furthermore, it must be considered in design and sizing of respective attachment interfaces that tail booms according to the first type with relatively small cross sections exhibit larger interface loads in comparison to tail booms according to the second type.

As a result, two types of attachment interfaces are currently available: shear type attachment interfaces and tension bolt attachment interfaces. Shear type attachment interfaces are adapted to transfer the longitudinal and tangential loads occurring in operation by means of fasteners that are loaded by shear, i. e. wherein a given tail boom laminate is loaded by in-plane bearing. With such a shear type attachment interface, a respective tail cone skin of a given tail boom is usually attached to a rear fuselage of the main fuselage body of a rotorcraft by means of an associated attachment assembly having a splice doubler. The shear type attachment interface is generally considered as defining the most efficient attachment interface, as splice doublers are simple and as the shear type attachment interface excites little offset moments and transfers all loads by shear avoiding secondary bending and a necessity of using large and heavy bolts. However, the shear type attachment interface is less appropriate in terms of tolerance, ability of replacement and interchangeability. Nevertheless, load introduction during operation requires a close fit of applied fasteners, which excites a special challenge when dealing with repeated attachment and detachment.

In contrast thereto, tension bolt attachment interfaces usually employ attachment assemblies having a ring or frame element with a side wall that typically comprises a "L-shaped" cross section. Respective L-shaped frame elements are generally used in order to allow bigger tolerances and interchangeability of the tail-boom. However, the L-shaped frame elements are inefficient in weight and are normally made of metallic materials. Thus, they are sensitive to fatigue and also lead to costly parts ("critical parts") and intensive inspection processes (frame and fasteners) with rather short inspection intervals. Moreover, associated load transferring fasteners are loaded in tension which makes them sensitive to failure, relaxation, and fatigue. The result is a rather expensive design with high maintenance burden. In addition, with such L-shaped frames interaction of different loads on the associated load transferring fasteners leads to odd forces and moments on the fasteners and leads to a need for oversized fasteners and difficulties in their optimization, as they attract loads in almost all directions: Vertical shear, horizontal shear, and mainly tension (as to a certain extend shear is transferred by friction generated by a very high pre-torque on the fasteners).

More specifically, attachment of a tail boom to a rear fuselage of a rotorcraft is frequently achieved by means of an attachment assembly in the form of a back-to-back arrangement of two regular frames with L-shaped cross-section which are attached to each other by a comparatively big number of screws loaded mainly in tension. Due to the L-shape of the frames the screws have an offset to a respective skin of the tail boom and rear fuselage, i. e. intermediate structure of the rotorcraft. This results in an unfolding load on the L-shaped frames and to bending on the screws which are loaded primarily in tension. As the holes for these screws are usually significantly bigger than the screw diameter, this design principle allows to compensate a certain manufacturing tolerance in the size of the parts and, in consequence, of respective hole positions between tail boom and rear fuselage, i. e. intermediate structure.

Another simple and common design is to use an attachment assembly formed by a simple lap joint or using an additional splice-plate in order to connect both parts, i. e. the tail boom and the rear fuselage with a so-called lap joint. The advantage of this basic design principle is that it is cheap and as well easy to manufacture. The disadvantage is that the connection does not enable removal of the tail boom from the rear fuselage of the rotorcraft or a respective intermediate structure, or even to interchange the tail boom, which is often an important functionality in the rotorcraft field. In fact, for transportation, maintenance, or repair purposes the tail boom may generally be removed and re-installed afterwards. This is not possible with the splice-plate design. An additional advantage of this design is, however, that the bolts are loaded in shear only, which is currently the design principle with respect to improved load path, damage tolerance, and failure behavior in case of overload. Moreover, no re-torque procedure is needed in order to check the needed pre-tension of the fasteners.

Illustrative attachment interfaces with respective attachment assemblies in general are described in the documents EP 3 753 843 A1, EP 3 441 300 A1, US 2017/0036751 A1, EP 2 727 821 A1, US 2011/0089292 A1, US 2008/0067289 A1, US 2007/0016336 A1, US 6 042 055 A, WO 94/01735 A1, and US 2 029 635 A. An attachment interface for attachment of a tail boom to a rear fuselage of a rotorcraft by means of a respective attachment assembly is e. g. described in the document US 5,676,335.

The document EP 3 225 537 A1 describes a helicopter with a fuselage and a composite tail boom, the composite tail boom comprising at least a tubular tail boom cone and a composite attachment ring segment that defines a mating face, the mating face being connected to the fuselage at an associated connection interface by means of a plurality of tension members that are oriented longitudinally with respect to a longitudinal extension direction of the composite tail boom, the plurality of tension members being distributed over a perimeter of the composite attachment ring segment, the composite attachment ring segment comprising a clamp ring section with a plurality of tension member accommodations, the clamp ring section defining the mating face of the composite attachment ring segment, wherein the plurality of tension members is at least partly accommodated in the plurality of tension member accommodations.

It is an object of the present invention to provide a new attachment assembly for attachment of a tail boom to a rear fuselage of a rotorcraft. It is a further object of the present invention to provide a tail boom for a rotorcraft, which comprises such an attachment assembly, as well as a rotorcraft with a rear fuselage and a tail boom, wherein the tail boom is attached to the rear fuselage by means of such an attachment assembly.

This object is solved by an attachment assembly for attachment of a tail boom to a rear fuselage of a rotorcraft, the attachment assembly comprising the features of claim 1. More specifically, according to the present invention the attachment assembly comprises a ring-shaped interconnecting carrier with a predetermined wall thickness, a predefined number of plate-shaped shear load transfer bodies connected at first discrete angular positions to the ring-shaped interconnecting carrier for transfer of loads essentially in circumferential direction of the ring-shaped interconnecting carrier, and a plurality of axial load transfer bodies connected to the ring-shaped interconnecting carrier at second discrete angular positions for transfer of loads in a direction essentially perpendicular to both the predetermined wall thickness and the circumferential direction of the ring-shaped interconnecting carrier. The second discrete angular positions are different from the first discrete angular positions. The predefined number of shear load transfer bodies and the plurality of axial load transfer bodies extend only on one axial end face of the ring-shaped interconnecting carrier from the ring-shaped interconnecting carrier at least approximately in the direction essentially perpendicular to both the predetermined wall thickness and the circumferential direction of the ring-shaped interconnecting carrier. The attachment assembly forms a crown-shaped structure.

Provision of the attachment assembly enables a simple effective and safe way to connect a tail boom to a rear fuselage or a respective intermediate structure of a rotorcraft. In an illustrative realization, the attachment assembly may be formed as a single continuous curved splice sheet. This splice sheet preferably comprises a unique shape on at least one side in order to integrate at dedicated positions soft or flexible lug arms, e. g. finger webs, in combination with comparatively stiff shear panels, e. g. shear webs, and a preferably continuous splice-plate on the other side. With this design all loads may be directed to respective individual areas of the rear fuselage to tail boom junction where they can be taken most effectively and do not interact with secondary loads. Moreover, this design is more damage-tolerant. Result is a comparatively lightweight design principle with reduced fatigue loaded critical parts, a relaxed tolerance requirement, and an improved load path with clear fastener load definition.

More specifically, the attachment assembly enables definition of a non-continuous ("discrete") attachment of the tail boom to the rear fuselage of the rotorcraft on one side and a continuous joint at the other side. The main purpose is to create flexibility of respective connection points between both parts in certain areas and in dedicated directions in order to achieve an adaptivity of the attachment assembly, which may be segmented instead of being made out of one single part.

The discrete attachment of the tail boom to the rear fuselage of the rotorcraft is achieved by a dedicated arrangement of comparatively soft or flexible lug arms, e. g. finger webs, in combination with comparatively stiff shear panels, e. g. shear webs, in the area of the neutral axis of the tail boom: in a side view e. g. at half of the height of the tail-boom cross-section and in a top view around the center-line of the tail boom. This dedicated arrangement with the flexible lug arms in combination with the stiff shear panels enables separation of the load path of shear loads and tension/compression loads at a respective tail boom junction. Thus, due to the separation of the load path an improved design of the connection may be achieved as loads are free from secondary loads. Moreover, as the load path is separated a fail-safe design is achieved which increases safety and reliability because, if the attachment assembly is formed of a composite material, a crack may not propagate between adjacent flexible lug arms and/or shear panels.

Furthermore, a predefined distance between the individual flexible lug arms may be variable according to respective local force fluxes: The higher the fluxes are, the closer the individual flexible lug arms may be arranged in order to cope with the loads. Furthermore, adaptability or flexibility respectively of the attachment assembly, i. e. a respective interconnecting carrier thereof, in radial direction (or out-of-plane respectively) and in case of the flexible lug arms in hoop direction on top, may be achieved. This advantageously reduces the need for precision of the position of respective mounting interfaces at the rear fuselage and tail boom junction and enables interchangeability of the tail boom.

In summary, the attachment assembly offers various advantages in different aspects for forming an attachment interface at a junction between a tail boom and a rear fuselage, i. e. an intermediate structure of a rotorcraft:
- A respective tolerancing between a given tail boom and a rear fuselage of a rotorcraft is simplified as respective individual connection points formed by the flexible lug arms and stiff shear panels may be moved into position within a certain tolerance in terms of bending and twisting in different directions.
   ∘ The respective tolerancing is improved with respect to the radial direction as the individual flexible lug arms and stiff shear panels can be bended in radial direction.
   ∘ As the flexible lug arms are flexible, i. e. soft in hoop direction, a respective positioning of associated mounting interfaces, such as mounting holes, is less sensitive.
- The load path between the tail boom and the rear fuselage of the rotorcraft is optimized as the shear loads are transferred at their optimum position:
   ∘ Shear loads in circumferential direction of the tail boom are transferred at the stiff shear panels as their maximum occurs at respective locations of the stiff shear panels by definition.
   o Normal loads in axial direction of the tail boom are transferred at the flexible lug arms as they have their maximum at respective locations of the flexible lug arms.
- Due to a predetermined stiffness of the individual flexible lug arms in axial direction of the tail boom an odd loading at the flexible lug arms is avoided as they are preferably stiff in load direction, but flexible, i. e. soft in all other directions so that they attract loads in the direction they are intended to work, i. e. in their axial direction, but avoid attracting loads in all other directions, i. e. perpendicular to the axial direction. Thus, a respective load magnitude is reduced for associated individual fasteners.
- With reduced loads the individual fasteners may be of reduced diameter which leads to weight saving potential and comparatively predictive load distribution which is a benefit with respect to optimization as the optimization is simple.
- By splitting-up occurring forces to the individual flexible lug arms and stiff shear panels, a fail-safe design is provided as sizing of the attachment assembly may be performed in a manner that the failure of one flexible lug arm does not lead to catastrophic failure and as a crack in a flexible lug arm may not propagate to other flexible lug arms or stiff shear panels. This advantageously increases safety.
- In comparison to the current standard joining method with a back-to-back arrangement of two L-shaped frames as described above, the load path is more direct and avoids tension loaded fasteners which need to be re-torqued and which are sensitive to fatigue. In fact, the thus tension loaded fasteners tend to be loaded in eccentric loads on screws, which is not recommended. Therefore, the attachment assembly and, more generally, the attachment interface may advantageously use bolts loaded in shear. This is an improved design with respect to damage tolerance and consequence of a loose nut as the fastener stays in place under load.

According to some aspects, the ring-shaped interconnecting carrier is segmented into at least two carrier ring segments.

Preferably, a first carrier ring segment of the at least two carrier ring segments is connected to at least one of the plurality of axial load transfer bodies.

Preferably, a second carrier ring segment of the at least two carrier ring segments is connected to at least one of the predefined number of shear load transfer bodies.

According to some aspects, each shear load transfer body of the predefined number of shear load transfer bodies extends over an angle of at least 5° of the ring-shaped interconnecting carrier.

According to some aspects, each shear load transfer body of the predefined number of shear load transfer bodies forms an extension plane defined by associated extension directions, wherein each shear load transfer body is stiff in the associated extension directions and flexible in a direction perpendicular to the associated extension directions.

According to some aspects, each axial load transfer body of the plurality of axial load transfer bodies is finger-shaped and comprises an elongated finger portion and an associated mounting interface.

According to some aspects, the elongated finger portion of each axial load transfer body of the plurality of axial load transfer bodies extends in an associated finger extension direction, wherein the elongated finger portion is stiff in the associated finger extension direction and flexible in directions perpendicular to the associated finger extension direction.

According to some aspects, the ring-shaped interconnecting carrier comprises at least one row of mounting interfaces, in particular bolt holes, for mounting to a tail boom of a rotorcraft.

According to some aspects, each shear load transfer body of the predefined number of shear load transfer bodies comprises a single row of mounting interfaces, in particular a single row of fastener holes, for mounting to a rear fuselage of a rotorcraft.

According to some aspects, each axial load transfer body of the plurality of axial load transfer bodies comprises one mounting interface, in particular one fastener hole, for mounting to a rear fuselage of a rotorcraft.

The object of the present invention is further solved by a tail boom for a rotorcraft, which comprises an attachment assembly as described above.

Moreover, the object of the present invention is solved by a rotorcraft with a rear fuselage and a tail boom, wherein the tail boom is attached to the rear fuselage by means of an attachment assembly as described above.

According to some aspects, the ring-shaped interconnecting carrier of the attachment assembly is mounted to the tail boom via a plurality of permanent fasteners, in particular bolts.

According to some aspects, the predefined number of shear load transfer bodies and the plurality of axial load transfer bodies are mounted to the rear fuselage via a plurality of removable fasteners, in particular fasteners.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of a rotorcraft with a tail boom and an attachment interface,
- Figure 2 shows a side view of a section of the rotorcraft of Figure 1 with forces and moments acting on the tail boom and the attachment interface,
- Figure 3 shows a top view of a section of the rotorcraft of Figure 1 with forces and moments acting on the tail boom and the attachment interface,
- Figure 4 shows an exploded view of a mounting area of the tail boom of the rotorcraft of Figure 1 to a rear fuselage of the rotorcraft with an attachment assembly,
- Figure 5 shows a side view of the mounting area of Figure 4 in mounted state,
- Figure 6 shows side views of the attachment assembly of Figure 4 and Figure 5, and
- Figure 7 shows a perspective view of the tail boom of Figure 1 to Figure 3 with the attachment assembly of Figure 4 to Figure 6.

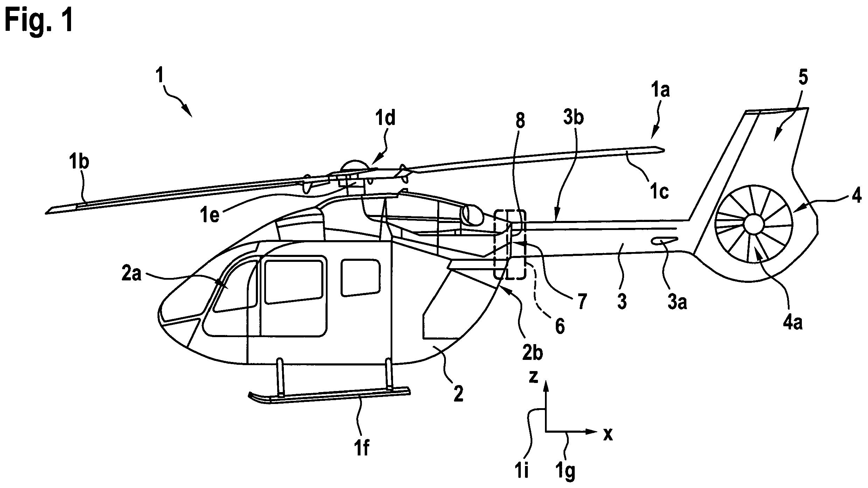

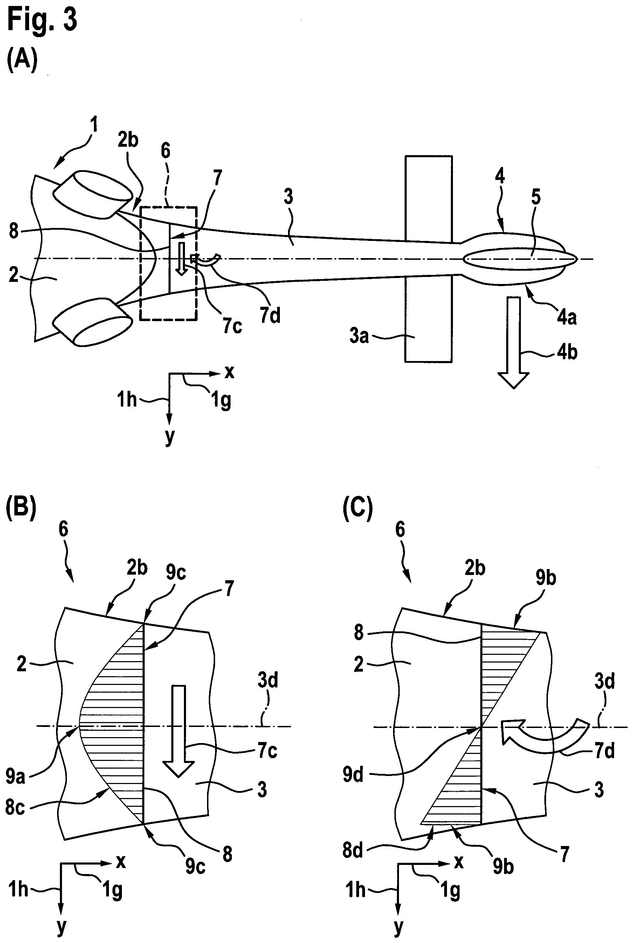

Figure 1 shows an aircraft 1 that is exemplarily illustrated as a rotorcraft and, more particularly, as a helicopter. Thus, for purposes of simplicity and clarity, the aircraft 1 is hereinafter referred to as the "helicopter 1". The helicopter 1 extends in a longitudinal or length direction 1g, which is also referred to hereinafter as the "x-axis 1g", a vertical or height direction 1i, which is also referred to hereinafter as the "z-axis 1i", and a lateral or width direction (1h in Figure 3).

The helicopter 1 comprises a fuselage 2. Illustratively, the fuselage 2 is connected to a landing gear 1f and defines a cabin 2a and a rear fuselage 2b.

The rear fuselage 2b is connected to a tail boom 3. Illustratively, the tail boom 3 is attached in a mounting area 6 by means of an attachment interface 7 to the rear fuselage 2b such that the tail boom 3 extends from the fuselage 2 at least approximately in direction of the x-axis 1g. More specifically, the attachment interface 7 is provided at a junction 8 between the tail boom 3 and the rear fuselage 2b of the helicopter 1.

It should be noted that the rear fuselage 2b may be provided with a suitable intermediate structure for connection to the tail boom 3. However, such an intermediate structure is well-known to the person skilled in the art and not the subject of the present invention, so that for purposes of simplicity and conciseness reference is only made to attachment of the tail boom 3 to the rear fuselage 2b of the helicopter 1 as such.

The helicopter 1 illustratively further comprises at least one multi-blade main rotor 1a for providing lift and forward or backward thrust during operation. The at least one multi-blade main rotor 1a comprises a plurality of rotor blades 1b, 1c that are mounted at an associated rotor head 1d to a rotor shaft 1e, which rotates in operation of the helicopter 1 around an associated rotor axis.

By way of example, the helicopter 1 further comprises at least one preferentially shrouded counter-torque device 4 configured to provide counter-torque during operation, i. e. to counter the torque created by rotation of the at least one multi-blade main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5. Illustratively, the tail boom 3 is also provided with a suitable horizontal stabilizer 3a.

The tail boom 3 may be implemented as a composite tail boom, i. e. a tail boom that comprises composite material and that is preferably at least essentially manufactured from composite material. Illustratively, the composite tail boom 3 is implemented as a slim beam element essentially oriented in direction of the x-axis 1g of the helicopter 1, i. e. preferably at least essentially in parallel to the x-axis 1g, and comprises at least a tubular tail boom cone 3b. Such composite tail booms are well-known to the person skilled in the art and, therefore, not described in further detail for brevity and conciseness.

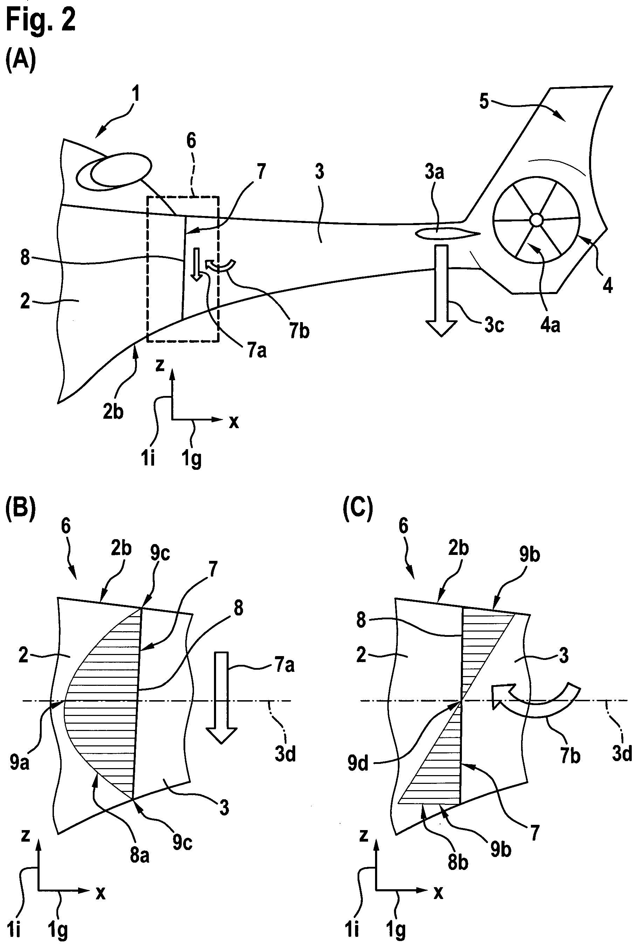

Figure 2 shows in parts (A) to (C) the mounting area 6 of Figure 1 in side view, with the attachment interface 7 provided at the junction 8 between the tail boom 3 and the rear fuselage 2b of the helicopter 1. As described above at Figure 1, the tail boom 3 is attached in the mounting area 6 by means of the attachment interface 7 to the rear fuselage 2b such that the tail boom 3 extends from the fuselage 2 of the helicopter 1 at least approximately in direction of the x-axis 1g.

Part (A) of Figure 2 further illustrates a main external force acting on the tail boom 3 in direction of the z-axis 1i of Figure 1, i. e. downward force 3c. This downward force 3c leads at the attachment interface 7 to a resulting shear force 7a in direction of the z-axis 1i, as well as to a resulting bending moment 7b around a lateral or width direction (1h in Figure 3) of the helicopter 1.

Part (B) of Figure 2 illustrates distribution of the resulting shear force 7a as shear flux 8a at the attachment interface 7. The shear flux 8a is maximal at a position 9a, which corresponds in the direction of the z-axis 1i approximately to the middle 3d of the height of the tail boom 3, and it is minimal at positions 9c, which correspond in the direction of the z-axis 1i to upper and lower ends of the tail boom 3.

Part (C) of Figure 2 illustrates distribution of the resulting bending moment 7b as axial flux 8b at the attachment interface 7. The axial flux 8b is maximal at positions 9b, which correspond in the direction of the z-axis 1i to upper and lower ends of the tail boom 3, and it is minimal at a position 9d, which corresponds in the direction of the z-axis 1i approximately to the middle 3d of the height of the tail boom 3.

Figure 3 shows in parts (A) to (C) the mounting area 6 of Figure 1 in top view, with the attachment interface 7 provided at the junction 8 between the tail boom 3 and the rear fuselage 2b of the helicopter 1. As described above at Figure 1, the tail boom 3 is attached in the mounting area 6 by means of the attachment interface 7 to the rear fuselage 2b such that the tail boom 3 extends from the fuselage 2 of the helicopter 1 at least approximately in direction of the x-axis 1g. Furthermore, a lateral or width direction 1h of the helicopter 1 and, thus, the tail boom 3 is illustrated, which is also referred to hereinafter as the "y-axis 1h".

Part (A) of Figure 3 further illustrates a main external force acting on the tail boom 3 in direction of the y-axis 1h, i. e. sideward force 4b. This sideward force 4b leads at the attachment interface 7 to a resulting shear force 7c in direction of the y-axis 1h, as well as to a resulting bending moment 7d around the z-axis 1i of Figure 1.

Part (B) of Figure 3 illustrates distribution of the resulting shear force 7c as shear flux 8c at the attachment interface 7. Similar to part (B) of Figure 2, the shear flux 8c is maximal at position 9a, which now corresponds in the direction of the y-axis 1h approximately to the middle 3d of the width of the tail boom 3, and it is minimal at positions 9c, which correspond in the direction of the y-axis 1h to left and right sides of the tail boom 3.

Part (C) of Figure 3 illustrates distribution of the resulting bending moment 7d as axial flux 8d at the attachment interface 7. Similar to part (C) of Figure 2, the axial flux 8d is maximal at positions 9b, which now correspond in the direction of the y-axis 1h to left and right sides of the tail boom 3, and it is minimal at position 9d, which corresponds in the direction of the y-axis 1h approximately to the middle 3d of the width of the tail boom 3.

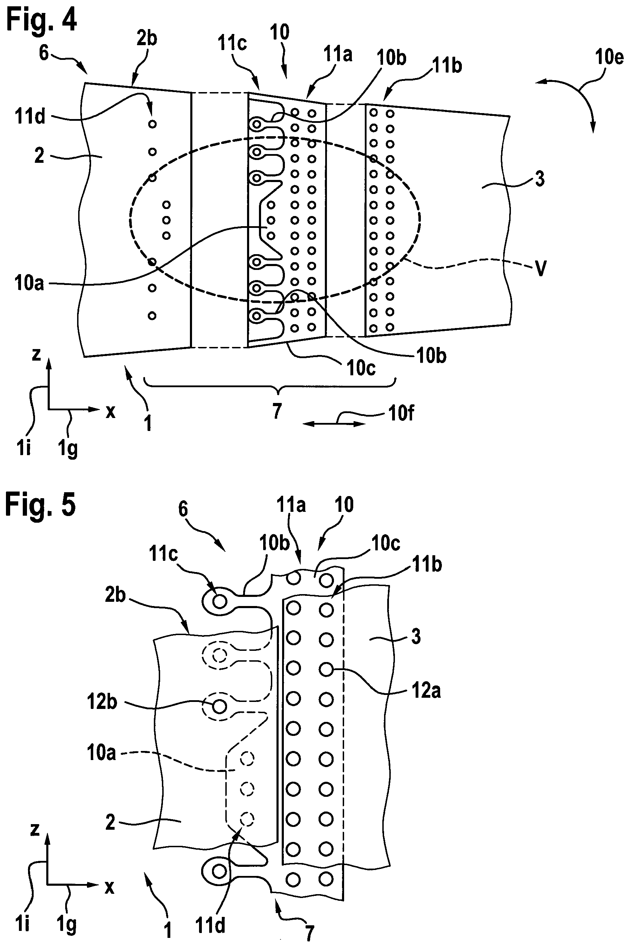

Figure 4 shows the mounting area 6 of Figure 1 in side view in relation to the x-axis 1g and the z-axis 1i. However, it should be noted that the following explanations likewise apply to the mounting area 6 when considered in top view, i. e. relative to the x-axis 1g and the y-axis 1h according to Figure 3.

In contrast to Figure 1, where the tail boom 3 is attached in the mounting area 6 by means of the attachment interface 7 to the rear fuselage 2b such that the tail boom 3 extends from the fuselage 2 of the helicopter 1 at least approximately in direction of the x-axis 1g, the attachment interface 7 is shown in exploded view in Figure 4 for further illustrating an attachment assembly 10 of the attachment interface 7. The attachment assembly 10 is provided for attachment of the tail boom 3 to the rear fuselage 2b. Preferably, the attachment assembly 10 forms a load transfer arrangement with a ring-shaped interconnecting carrier 10c.

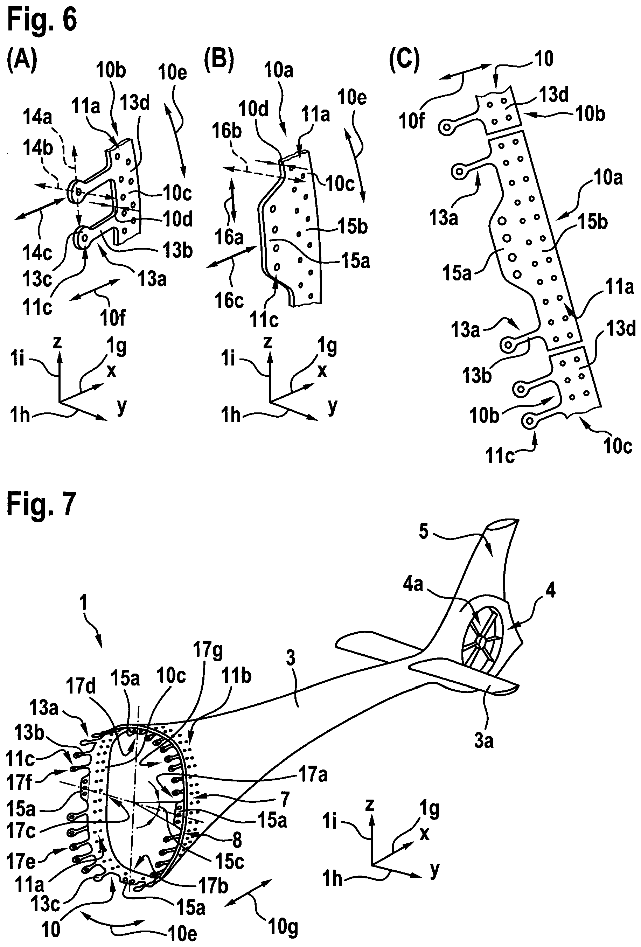

The ring-shaped interconnecting carrier 10c may be embodied as a continuous un-interrupted ring as described below at Figure 7, or it may be constituted by two or more carrier ring segments as described below at Figure 6. In the latter case, the attachment assembly 10 may e. g. be embodied by one or more shear web segments 10a, and one or more finger web segments 10b, as illustrated. Each shear web segment 10a is preferably adapted for an improved, preferentially optimized, transfer of loads essentially in circumferential direction 10e of the tail boom 3, i. e. around the x-axis 1g, and each finger web segment 10b is preferably adapted for an improved, preferentially optimized, transfer of loads essentially in length direction 10f of the tail boom 3, i. e. in direction of the x-axis 1g.

The ring-shaped interconnecting carrier 10c may comprise one or more rows of mounting interfaces 11a, in particular bolt holes, for mounting to the tail boom 3. Illustratively, the ring-shaped interconnecting carrier 10c comprises two rows of mounting interfaces 11a. Likewise, the tail boom 3 comprises one or more rows of mounting interfaces 11b, in particular bolt holes, for mounting to the ring-shaped interconnecting carrier 10c. Illustratively, the tail boom 3 comprises two rows of mounting interfaces 11b.

By way of example, the rear fuselage 2b comprises a single row of mounting interfaces 11d, in particular fastener holes, for mounting to the attachment assembly 10. Likewise, the attachment assembly 10 is provided with a single row of mounting interfaces 11c, in particular fastener holes, for mounting of the attachment assembly 10 to the rear fuselage 2b.

Figure 5 shows the mounting area 6 of Figure 4 in relation to the x-axis 1g and the z-axis 1i. However, in contrast to Figure 4 the tail boom 3 is now attached in the mounting area 6 by means of the attachment interface 7 via the attachment assembly 10 to the rear fuselage 2b such that the tail boom 3 extends from the fuselage 2 of the helicopter 1 at least approximately in direction of the x-axis 1g.

As described above at Figure 4, the attachment assembly 10 forms a load transfer arrangement with the ring-shaped interconnecting carrier 10c and is illustratively embodied by the one or more shear web segments 10a as well as the one or more finger web segments 10b. The ring-shaped interconnecting carrier 10c comprises the two rows of mounting interfaces 11a and the tail boom 3 comprises the two rows of mounting interfaces 11b. Moreover, the rear fuselage 2b comprises the single row of mounting interfaces 11d and the attachment assembly 10 is further provided with the single row of mounting interfaces 11c.

Preferably, the ring-shaped interconnecting carrier 10c of the attachment assembly 10 is mounted to the tail boom 3 via a plurality of permanent fasteners, in particular bolts. More specifically, the permanent fasteners are preferably mounted to the mounting interfaces 11a of the ring-shaped interconnecting carrier 10c and the mounting interfaces 11b of the tail boom 3. However, for simplicity and clarity of the drawing only a single permanent fastener is illustrated and labelled with the reference sign 12a.

In contrast thereto, the attachment assembly 10 is preferably mounted to the rear fuselage 2b via a plurality of removable fasteners, in particular screws. More specifically, the removable fasteners are preferably mounted to the mounting interfaces 11c of the attachment assembly 10 and the mounting interfaces 11d of the rear fuselage 2b. However, for simplicity and clarity of the drawing only a single removable fastener is illustrated and labelled with the reference sign 12b.

Figure 6 shows in parts (A) to (C) the attachment assembly 10 of Figure 4 and Figure 5, which is illustratively embodied by the one or more shear web segments 10a and the one or more finger web segments 10b. The attachment assembly 10 comprises the ring-shaped interconnecting carrier 10c with the two rows of mounting interfaces 11a, as well as with the single row of mounting interfaces 11c.

Part (A) illustrates a single finger web segment representatively for the one or more finger web segments 10b, which is also labelled with the reference sign 10b, for simplicity and clarity. The finger web segment 10b preferably comprises a plurality of fingers 13a, illustratively two fingers 13a, which may also be referred to as "lug arms", each of which comprises a load transfer body 13b connected to a finger web base carrier 13d. The finger web base carrier 13d may form a segment or an integral part of the ring-shaped interconnecting carrier 10c.

Each load transfer body 13b is preferably provided to transfer at least essentially loads in the direction 10f of Figure 4, i. e. in a direction essentially perpendicular to both a predetermined wall thickness 10d of the finger web base carrier 13d, i. e. the ring-shaped interconnecting carrier 10c, and the circumferential direction 10e of Figure 4 of the ring-shaped interconnecting carrier 10c, i. e. of the finger web base carrier 13d. Accordingly, each load transfer body 13b is preferably provided for transfer of loads in direction of the x-axis 1g, i. e. in axial direction, which corresponds to the direction 10f. Therefore, each load transfer body 13b is referred to hereinafter as "axial load transfer body 13b", for simplicity and clarity.

Illustratively, each axial load transfer body 13b of the plurality of axial load transfer bodies 13b comprises an elongated finger portion and an associated mounting interface 13 that implements one of the mounting interfaces 11c of the single row of mounting interfaces 11c, i. e. in particular a fastener hole. The elongated finger portion of each axial load transfer body 13b preferably extends in an associated finger extension direction 14c and is stiff in the associated finger extension direction 14c, and flexible in directions 14a, 14b perpendicular to the associated finger extension direction 14c.

It should be noted that different axial load transfer bodies 13b of the plurality of axial load transfer bodies 13b may have different lengths in direction of the x-axis 1g. A respective length may be adapted to the load that is to be transferred by a given axial load transfer body 13b.

Part (B) illustrates a single shear web segment representatively for the one or more shear web segments 10a, which is also labelled with the reference sign 10a, for simplicity and clarity. The shear web segment 10a preferably comprises at least one load transfer body 15a, preferentially and illustratively a single load transfer body 15a, which is connected to a shear web base carrier 15b. The shear web base carrier 15b may form a segment or an integral part of the ring-shaped interconnecting carrier 10c.

The load transfer body 15a is preferably provided to transfer at least essentially loads in the direction 10e of Figure 4, i. e. in the circumferential direction of the ring-shaped interconnecting carrier 10c and, thus, in the circumferential direction of the shear web base carrier 15b. Therefore, each load transfer body 15a is referred to hereinafter as "shear load transfer body 15a", for simplicity and clarity.

More specifically, each shear load transfer body 15a of the predefined number of shear load transfer bodies 15a is plate-shaped, may also be referred to as "shear plate", and comprises at least two mounting interfaces, which are illustratively arranged in a single row of mounting interfaces, in particular a single row of fastener holes, wherein each single mounting interface implements one of the mounting interfaces 11c of the single row of mounting interfaces 11c. Furthermore, each shear load transfer body 15a preferably forms an extension plane defined by associated extension directions 16a, 16b, wherein each shear load transfer body 15a is stiff in the associated extension directions 16a, 16b and flexible or soft in a direction 16c perpendicular to the associated extension directions 16a, 16b.

Part (C) represents a section of the attachment assembly 10 that illustratively comprises one shear web segment 10a and two finger web segments 10b. The shear web segment 10a comprises the shear web base carrier 15b and the two finger web segments 10b respectively comprise finger web base carriers 13d. The shear web base carrier 15b and the finger web base carriers 13d form the ring-shaped interconnecting carrier 10c which is, thus, segmented at least into two, and illustratively three, carrier ring segments 13d, 15b.

It should be noted that the shear web segment 10a illustratively comprises the shear load transfer body 15a and, in addition, two axial load transfer bodies 13b. In fact, a respective number of axial load transfer bodies 13b provided on the shear web segment 10a or on each one of the finger web segments 10b may be selected arbitrarily. However, the finger web segments 10b are preferably only provided with axial load transfer bodies 13b.

Figure 7 shows the tail boom 3 of Figure 1 to Figure 5, which is connected to the attachment assembly 10 of Figure 4 to Figure 6 via the mounting interfaces 11a of the ring-shaped interconnecting carrier 10c and the mounting interfaces 11b of the tail boom 3. However, in contrast to Figure 4 to Figure 6 the ring-shaped interconnecting carrier 10c is now embodied as a continuous, un-interrupted ring provided with a plurality of the axial load transfer bodies 13b of Figure 6, and a predefined number of the shear load transfer bodies 15a of Figure 6.

The axial load transfer bodies 13b and the shear load transfer bodies 15a extend from the ring-shaped interconnecting carrier 10c at least approximately in the direction 10f of Figure 6, i. e. essentially perpendicular to both the predetermined wall thickness 10d of Figure 6 and the circumferential direction 10e of Figure 6. Accordingly, the attachment assembly 10 as a whole forms a crown-shaped structure.

More specifically, the shear load transfer bodies 15a are preferably connected at first discrete angular positions 17a, 17b, 17c, 17d to the ring-shaped interconnecting carrier 10c for transfer of loads essentially in the circumferential direction 10e. Illustratively, the first discrete angular positions 17a, 17b, 17c, 17d are 90°, 180°, 270°, and 360°, respectively. Furthermore, each shear load transfer body 15a illustratively extends over an angle 15c of at least 5° of the ring-shaped interconnecting carrier 10c.

Moreover, the axial load transfer bodies 13b are preferably connected to the ring-shaped interconnecting carrier 10c at second discrete angular positions for transfer of loads in the direction 10f of Figure 6, i. e. essentially perpendicular to both the predetermined wall thickness 10d of Figure 6 and the circumferential direction 10e. For simplicity and clarity of the drawing only three angular positions of the second discrete angular positions are individually labelled with the reference signs 17e, 17f, 17g and approximately positioned at 225°, 285°, and 45°, respectively. The second discrete angular positions are different from the first discrete angular positions.

It should be noted that modifications to the above described embodiments are within the common knowledge of the person skilled in the art and, thus, also considered as being part of the present invention. For instance, the ring-shaped interconnecting carrier 10c of the attachment assembly 10 is preferably embodied as a splice-plate using composite material. This splice-plate is preferably comparatively stiff and rigidly and permanently connected to the tail boom 3, such that all forces and moments in the tail boom 3 may be transferred to this splice-plate. Furthermore, the fingers 13a of the attachment assembly 10 are preferably comparatively long so that they are flexible in hoop direction of the tail boom 3 and also flexible in radial direction of the tail boom 3 as described at Figure 6. Flexibility in hoop direction means that they cannot take significant loads, i. e. loads above a comparatively small threshold, in this direction and, thus, the load direction at the fingers is in tension/compression only, with small remaining components in hoop direction, which are however of secondary order of magnitude. Accordingly, at the fingers only axial loads in longitudinal direction can be taken and with this the load direction can be predicted or even more precise: the load direction can be "designed". Nevertheless, the length of the fingers has to be adapted to the individual loads and geometry: the fingers have to have a minimum length in order to be flexible enough but must not exceed a certain length as they would tend to fail in buckling under compression load. Thus, a respectively required length has to be computed case by case and as the buckling load is dependent on cross-section, also the shape of the finger and the material must be adapted. The length of the fingers may have a comparatively big variance in length in the real application. Moreover, the individual fingers may have their individual lengths defined such that in reality an irregular pattern of finger shapes and lengths can be the result. Furthermore, although it is described above at Figure 5 that the ring-shaped interconnecting carrier 10c of the attachment assembly 10 is mounted to the tail boom 3 whereas the mounting interfaces 11c of the attachment assembly 10 are mounted to the mounting interfaces 11d of the rear fuselage 2b, it is likewise possible to mount instead the ring-shaped interconnecting carrier 10c of the attachment assembly 10 to the rear fuselage 2b and the mounting interfaces 11c of the attachment assembly 10 to the tail boom 3.

### Reference List

- 1: rotorcraft
- 1a: multi-blade main rotor
- 1b, 1c: rotor blades
- 1d: rotor head
- 1e: rotor shaft
- 1f: landing gear
- 1g: longitudinal direction (x-axis)
- 1h: lateral direction (y-axis)
- 1i: vertical direction (z-axis)
- 2: fuselage
- 2a: cabin
- 2b: rear fuselage
- 3: tail boom
- 3a: horizontal stabilizer
- 3b: tail boom cone
- 3c: downward force
- 3d: middle of height and width of tail boom
- 4: counter-torque device
- 4a: tail rotor
- 4b: sideward force
- 5: fin
- 6: mounting area of tail boom to rear fuselage
- 7: attachment interface
- 7a: shear force in z-axis direction
- 7b: bending moment around y-axis
- 7c: shear force in y-axis direction
- 7d: bending moment around z-axis
- 8: rear fuselage and tail boom junction
- 8a: shear flux at attachment interface resulting from shear force in z-axis direction
- 8b: axial flux in x-axis direction resulting from bending moment around y-axis
- 8c: shear flux at attachment interface resulting from shear force in y-axis direction
- 8d: axial flux in x-axis direction resulting from bending moment around z-axis
- 9a: areas of maximum shear flux
- 9b: areas of maximum axial flux
- 9c: areas of minimum shear flux
- 9d: area of minimum axial flux
- 10: load transfer arrangement
- 10a: shear web segment
- 10b: finger web segment
- 10c: interconnecting carrier
- 10d: wall thickness
- 10e: circumferential direction of interconnecting carrier
- 10f: direction of interconnecting carrier perpendicular to both circumferential direction and wall thickness
- 11a, 11b, 11c, 11d: mounting interfaces
- 12a: permanent fasteners
- 12b: removable fasteners
- 13a: fingers
- 13b: axial load transfer body
- 13c: mounting interface
- 13d: finger web base carrier
- 14a, 14b, 14c: behavior indications
- 15a: shear load transfer body
- 15b: shear web base carrier
- 15c: angle
- 16a, 16b, 16c: behavior indications
- 17a, 17b, 17c, 17d, 17e, 17f, 17g: discrete angular positions

## Claims

1. An attachment assembly (10) for attachment of a tail boom (3) to a rear fuselage (2b) of a rotorcraft (1), the attachment assembly (10) forming a crown-shaped structure comprising:
a ring-shaped interconnecting carrier (10c) with a predetermined wall thickness (10d);
a predefined number of shear load transfer bodies (15a) connected at first discrete angular positions (17a, 17b, 17c, 17d) to the ring-shaped interconnecting carrier (10c) for transfer of loads essentially in circumferential direction (10e) of the ring-shaped interconnecting carrier (10c); wherein each shear load transfer body (15a) of the predefined number of shear load transfer bodies (15a) is plate-shaped; and
a plurality of axial load transfer bodies (13b) connected to the ring-shaped interconnecting carrier (10c) at second discrete angular positions (17e, 17f, 17g) for transfer of loads in a direction (10f) essentially perpendicular to both the predetermined wall thickness (10d) and the circumferential direction (10e) of the ring-shaped interconnecting carrier (10c),
wherein the second discrete angular positions (17e, 17f, 17g) are different from the first discrete angular positions (17a, 17b, 17c, 17d), and wherein the predefined number of shear load transfer bodies (15a) and the plurality of axial load transfer bodies (13b) extend only on one axial end face of the ring-shaped interconnecting carrier (10c) from the ring-shaped interconnecting carrier (10c) at least approximately in the direction (10f) perpendicular to both the predetermined wall thickness (10d) and the circumferential direction (10e) of the ring-shaped interconnecting carrier (10c).

2. The attachment assembly (10) of claim 1,
wherein the ring-shaped interconnecting carrier (10c) is segmented into at least two carrier ring segments (13d, 15b).

3. The attachment assembly (10) of claim 2,
wherein a first carrier ring segment (13d) of the at least two carrier ring segments (13d, 15b) is connected to at least one of the plurality of axial load transfer bodies (13b).

4. The attachment assembly (10) of claim 2 or 3,
wherein a second carrier ring segment (15b) of the at least two carrier ring segments (13d, 15b) is connected to at least one of the predefined number of shear load transfer bodies (15a).

5. The attachment assembly (10) of any one of the preceding claims, wherein each shear load transfer body (15a) of the predefined number of shear load transfer bodies (15a) extends over an angle (15c) of at least 5° of the ring-shaped interconnecting carrier (10c).

6. The attachment assembly (10) of any one of the preceding claims, wherein each shear load transfer body (15a) of the predefined number of shear load transfer bodies (15a) forms an extension plane defined by associated extension directions (16a, 16b), and wherein each shear load transfer body (15a) is stiff in the associated extension directions (16a, 16b) and flexible in a direction (16c) perpendicular to the associated extension directions (16a, 16b).

7. The attachment assembly (10) of any one of the preceding claims, wherein each axial load transfer body (13b) of the plurality of axial load transfer bodies (13b) is finger-shaped and comprises an elongated finger portion (13a) and an associated first mounting interface.

8. The attachment assembly (10) the preceding claim, wherein the elongated finger portion (13a) of each axial load transfer body (13b) of the plurality of axial load transfer bodies (13b) extends in an associated finger extension direction (14c), and wherein the elongated finger portion (13a) is stiff in the associated finger extension direction (14c) and flexible in directions (14a, 14b) perpendicular to the associated finger extension direction (14c).

9. The attachment assembly (10) of any one of the preceding claims, wherein the ring-shaped interconnecting carrier (10c) comprises at least one row of second mounting interfaces, in particular bolt holes, for mounting to a tail boom (3) of a rotorcraft (1).

10. The attachment assembly (10) of any one of the preceding claims, wherein each shear load transfer body (15a) of the predefined number of shear load transfer bodies (15a) comprises a single row of third mounting interfaces, in particular a single row of fastener holes, for mounting to a rear fuselage (2b) of a rotorcraft (1).

11. The attachment assembly (10) of any one of the preceding claims, wherein each axial load transfer body (13b) of the plurality of axial load transfer bodies (13b) comprises one fourth mounting interface, in particular one fastener hole, for mounting to a rear fuselage (2b) of a rotorcraft (1).

12. A tail boom (3) for a rotorcraft (1), comprising an attachment assembly (10) according to any one of the preceding claims.

13. A rotorcraft (1) with a rear fuselage (2b) and a tail boom (3), wherein the tail boom (3) is attached to the rear fuselage (2b) by means of an attachment assembly (10) according to any one of the claims 1-11.

14. The rotorcraft (1) of claim 13,
wherein the ring-shaped interconnecting carrier (10c) of the attachment assembly (10) is mounted to the tail boom (3) via a plurality of permanent fasteners (12a), in particular bolts.

15. The rotorcraft (1) of claim 13 or 14,
wherein the predefined number of shear load transfer bodies (15a) and the plurality of axial load transfer bodies (13b) are mounted to the rear fuselage (2b) via a plurality of removable fasteners (12b), in particular screws.

## Patentansprüche

1. Befestigungsvorrichtung (10) zum Befestigen eines Heckauslegers (3) an einem hinteren Rumpf (2b) eines Drehflüglers (1), wobei die Befestigungsvorrichtung (10) eine kronenförmige Struktur bildet, die umfasst:
einen ringförmigen Verbindungsträger (10c) mit einer vorgegebenen Wandstärke (10d);
eine vorgegebene Anzahl von Scherkraftübertragungskörpern (15a), die an ersten diskreten Winkelpositionen (17a, 17b, 17c, 17d) mit dem ringförmigen Verbindungsträger (10c) verbunden sind, um Lasten im Wesentlichen in Umfangsrichtung (10e) des ringförmigen Verbindungsträgers (10c) zu übertragen; wobei jeder Scherkraftübertragungskörper (15a) der vorgegebenen Anzahl von Scherkraftübertragungskörpern (15a) plattenförmig ist; und
eine Mehrzahl von Axialkraftübertragungskörpern (13b), die an zweiten diskreten Winkelpositionen (17e, 17f, 17g) mit dem ringförmigen Verbindungsträger (10c) verbunden sind, um Lasten in einer Richtung (10f) zu übertragen, die im Wesentlichen senkrecht sowohl zur vorgegebenen Wandstärke (10d) als auch zur Umfangsrichtung (10e) des ringförmigen Verbindungsträgers (10c) ist,
wobei sich die zweiten diskreten Winkelpositionen (17e, 17f, 17g) von den ersten diskreten Winkelpositionen (17a, 17b, 17c, 17d) unterscheiden, und wobei sich die vorgegebene Anzahl von Scherkraftübertragungskörpern (15a) und die Mehrzahl von Axialkraftübertragungskörpern (13b) nur an einer axialen Stirnseite des ringförmigen Verbindungsträgers (10c) vom ringförmigen Verbindungsträger (10c) zumindest annähernd in Richtung (10f) senkrecht sowohl zur vorgegebenen Wandstärke (10d) als auch zur Umfangsrichtung (10e) des ringförmigen Verbindungsträgers (10c) erstrecken.

2. Befestigungsvorrichtung (10) nach Anspruch 1,
bei der der ringförmige Verbindungsträger (10c) in mindestens zwei Trägerringsegmente (13d, 15b) unterteilt ist.

3. Befestigungsvorrichtung (10) nach Anspruch 2,
bei der ein erstes Trägerringsegment (13d) der mindestens zwei Trägerringsegmente (13d, 15b) mit mindestens einem der mehreren Axiallastübertragungskörper (13b) verbunden ist.

4. Befestigungsvorrichtung (10) nach Anspruch 2 oder 3,
bei der ein zweites Trägerringsegment (15b) der mindestens zwei Trägerringsegmente (13d, 15b) mit mindestens einem der vorgegebenen Anzahl von Scherkraftübertragungskörpern (15a) verbunden ist.

5. Befestigungsvorrichtung (10) nach einem der vorstehenden Ansprüche,
bei der sich jeder Scherkraftübertragungskörper (15a) aus der vorgegebenen Anzahl von Scherkraftübertragungskörpern (15a) über einen Winkel (15c) von mindestens 5° des ringförmigen Verbindungsträgers (10c) erstreckt.

6. Befestigungsvorrichtung (10) nach einem der vorstehenden Ansprüche,
bei der jeder Scherkraftübertragungskörper (15a) aus der vorgegebenen Anzahl von Scherkraftübertragungskörpern (15a) eine durch zugehörige Erstreckungsrichtungen (16a, 16b) definierte Erstreckungsebene bildet, und bei der jeder Scherkraftübertragungskörper (15a) in den zugehörigen Erstreckungsrichtungen steif (16a, 16b) steif und in einer Richtung (16c) senkrecht zu den zugehörigen Erstreckungsrichtungen (16a, 16b) flexibel ist.

7. Befestigungsvorrichtung (10) nach einem der vorstehenden Ansprüche, bei der jeder Axiallastübertragungskörper (13b) aus der Mehrzahl von Axiallastübertragungskörpern (13b) fingerförmig ist und einen langgestreckten Fingerabschnitt (13a) und eine zugehörige erste Befestigungsschnittstelle umfasst.

8. Befestigungsvorrichtung (10) nach dem vorstehenden Anspruch,
bei der sich der langgestreckte Fingerabschnitt (13a) jedes Axiallastübertragungskörpers (13b) der mehreren Axiallastübertragungskörper (13b) in einer zugehörigen Fingererstreckungsrichtung (14c) erstreckt, und wobei der langgestreckte Fingerabschnitt (13a) in der zugehörigen Fingererstreckungsrichtung (14c) steif und in Richtungen (14a, 14b) senkrecht zur zugehörigen Fingererstreckungsrichtung (14c) flexibel ist.

9. Befestigungsvorrichtung (10) nach einem der vorstehenden Ansprüche,
bei der der ringförmige Verbindungsträger (10c) mindestens eine Reihe von zweiten Befestigungsschnittstellen, insbesondere Schraublöchern, zur Befestigung an einem Heckausleger (3) eines Drehflügelflugzeugs (1) umfasst.

10. Befestigungsvorrichtung (10) nach einem der vorstehenden Ansprüche, bei der jeder Scherkraftübertragungskörper (15a) aus der vorgegebenen Anzahl von Scherkraftübertragungskörpern (15a) eine einzige Reihe von dritten Befestigungsschnittstellen, insbesondere eine einzige Reihe von Befestigungslöchern, zur Befestigung an einem hinteren Rumpf (2b) eines Drehflüglers (1) umfasst.

11. Befestigungsvorrichtung (10) nach einem der vorstehenden Ansprüche, bei der jeder Axialkraftübertragungskörper (13b) aus der Mehrzahl von Axialkraftübertragungskörpern (13b) eine vierte Befestigungsschnittstelle, insbesondere ein Befestigungsloch, zur Befestigung an einem hinteren Rumpf (2b) eines Drehflüglers (1) umfasst.

12. Heckausleger (3) für ein Drehflügelflugzeug (1), umfassend eine Befestigungsvorrichtung (10) nach einem der vorstehenden Ansprüche.

13. Drehflügler (1) mit einem hinteren Rumpf (2b) und einem Heckausleger (3), wobei der Heckausleger (3) mittels einer Befestigungsanordnung (10) nach einem der Ansprüche 1 bis 11 am hinteren Rumpf (2b) befestigt ist

14. Drehflügler (1) nach Anspruch 13,
bei dem der ringförmige Verbindungsträger (10c) der Befestigungsanordnung (10) über mehrere dauerhafte Befestigungselemente (12a), insbesondere Bolzen, am Heckausleger (3) angebracht ist.

15. Drehflügler (1) nach Anspruch 13 oder 14,
bei dem die vorgegebene Anzahl von Scherkraftübertragungskörpern (15a) und die Mehrzahl von Axialkraftübertragungskörpern (13b) über eine Mehrzahl von lösbaren Befestigungselementen (12b), insbesondere Schrauben, am hinteren Rumpf (2b) befestigt sind.

## Revendications

1. Ensemble (10) de fixation pour la fixation d'une poutre de queue (3) sur un fuselage (2b) arrière d'un giravion (1), l'ensemble (10) de fixation formant une structure en forme de couronne comprenant :
un membre (10c) de liaison porteur en forme d'anneau avec une épaisseur (10d) de paroi prédéterminée ;
un nombre prédéfini de corps (15a) de transfert d'effort en cisaillement raccordé à l'emplacement de premières positions (17a, 17b, 17c, 17d) angulaires distinctes sur le membre (10c) de liaison porteur en forme d'anneau afin de transférer des efforts essentiellement suivant une direction (10e) circonférentielle du membre (10c) de liaison porteur en forme d'anneau ; dans lequel chaque corps (15a) de transfert d'effort en cisaillement parmi le nombre prédéfini de corps (15a) de transfert d'effort en cisaillement est en forme de plaque ; et
une pluralité de corps (13b) de transfert d'effort axial raccordée au membre (10c) de liaison porteur en forme d'anneau à l'emplacement de secondes positions (17e, 17f, 17g) angulaires distinctes afin de transférer des efforts suivant une direction (10f) essentiellement perpendiculaire à la fois à l'épaisseur (10d) de la paroi prédéterminée et à la direction (10e) circonférentielle du membre (10c) de liaison porteur en forme d'anneau,
dans lequel les secondes positions (17e, 17f, 17g) angulaires distinctes sont différentes des premières positions (17a, 17b, 17c, 17d) angulaires distinctes, et dans lequel le nombre prédéfini de corps (15a) de transfert d'effort en cisaillement et la pluralité de corps (13b) de transfert d'effort axial s'étendent seulement sur une face d'extrémité axiale du membre (10c) de liaison porteur en forme d'anneau depuis le membre (10c) de liaison porteur en forme d'anneau au moins approximativement suivant une direction (10f) perpendiculaire à la fois à l'épaisseur (10d) de la paroi prédéterminée et la direction (10e) circonférentielle du membre (10c) de liaison porteur en forme d'anneau.

2. Ensemble (10) de fixation selon la revendication 1,
dans lequel le membre (10c) de liaison porteur en forme d'anneau est divisé au moins en deux segments (13d, 15b) d'anneau porteur.

3. Ensemble (10) de fixation selon la revendication 2,
dans lequel un premier segment (13d) d'anneau porteur parmi lesdits au moins deux segments d'anneau porteur est raccordé à au moins l'un parmi la pluralité de corps (13b) de transfert d'effort axial.

4. Ensemble (10) de fixation selon la revendication 2 ou 3,
dans lequel un second segment (15b) d'anneau porteur parmi lesdits au moins deux segments (13d, 15b) d'anneau porteur est raccordé à au moins l'un parmi le nombre prédéfini de corps (15a) de transfert d'effort en cisaillement.

5. Ensemble (10) de fixation selon l'une quelconque des revendications précédentes,
dans lequel chaque corps (15a) de transfert d'effort en cisaillement parmi le nombre prédéfini de corps (15a) de transfert d'effort en cisaillement s'étend sur un angle (15c) d'au moins 5° du membre (10c) de liaison porteur en forme d'anneau.

6. Ensemble (10) de fixation selon l'une quelconque des revendications précédentes,
dans lequel chaque corps (15a) de transfert d'effort en cisaillement parmi le nombre prédéfini de corps (15a) de transfert d'effort en cisaillement forme un plan de prolongement défini par des directions (16a, 16b) de prolongement associées, et dans lequel le corps (15a) de transfert d'effort en cisaillement est rigide suivant les directions (16a, 16b) de prolongement associées et flexible suivant une direction (16c) perpendiculaire aux directions (16a, 16b) de prolongement associées.

7. Ensemble (10) de fixation selon l'une quelconque des revendications précédentes,
dans lequel chaque corps (13b) de transfert d'effort axial parmi la pluralité de corps (13b) de transfert d'effort axial est en forme de doigt et comprend une partie (13a) de doigt allongée et une première interface de montage associée.

8. Ensemble (10) de fixation selon la revendication précédente, dans lequel la partie (13a) de doigt allongée de chaque corps (13b) de transfert d'effort axial parmi la pluralité de corps (13b) de transfert d'effort axial s'étend suivant une direction (14c) de prolongement de doigt associée, et dans lequel la partie (13a) de doigt allongée est rigide suivant la direction (14c) de prolongement de doigt associée et flexible suivant les directions (14a, 14b) perpendiculaires à la direction (14c) de prolongement de doigt associée.

9. Ensemble (10) de fixation selon l'une quelconque des revendications précédentes,
dans lequel le membre (10c) de liaison porteur en forme d'anneau comprend au moins une rangée de deuxièmes interfaces de montage, en particulier des trous pour boulons, pour le montage sur une poutre de queue (3) d'un giravion (1).

10. Ensemble (10) de fixation selon l'une quelconque des revendications précédentes,
dans lequel chaque corps (15a) de transfert d'effort en cisaillement parmi le nombre prédéfini de corps (15a) de transfert d'effort en cisaillement comprend une rangée unique de troisièmes interfaces de montage, en particulier une rangée unique de trous de fixation, pour le montage sur un fuselage (2b) arrière d'un giravion (1).

11. Ensemble (10) de fixation selon l'une quelconque des revendications précédentes,
dans lequel chaque corps (13b) de transfert d'effort axial parmi la pluralité de corps (13b) de transfert d'effort axial comprend une quatrième interface de montage, en particulier un trou de fixation pour le montage sur un fuselage (2b) arrière d'un giravion (1).

12. Poutre de queue (3) pour un giravion (1), comprenant un ensemble (10) de fixation selon l'une quelconque des revendications précédentes.

13. Giravion (1) avec un fuselage (2b) arrière et une poutre de queue (3), dans lequel la poutre de queue (3) est fixée au fuselage (2b) arrière au moyen d'un ensemble (10) de fixation selon l'une quelconque des revendications 1 à 11.

14. Giravion (1) selon la revendication 13,
dans lequel le membre (10c) de liaison porteur en forme d'anneau de l'ensemble (10) de fixation est monté sur la poutre de queue (3) via une pluralité de fixations (12a) permanentes, en particulier des boulons.

15. Giravion (1) selon la revendication 13 ou 14,
dans lequel le nombre prédéfini de corps (15a) de transfert d'effort en cisaillement et la pluralité de corps (13b) de transfert d'effort axial sont montés sur le fuselage (2b) arrière via une pluralité de fixations (12b) amovibles, en particulier des vis.
